# EUROPEAN PATENT SPECIFICATION

(11) **EP 4 140 809 B1**
(45) Date of publication and mention of the grant of the patent: **13.03.2024**
(21) Application number: 22191569.7
(22) Date of filing: 22.08.2022
(51) Int. Cl.: B60P 3/39, A47C 23/06, A47C 17/80

(54) **LIFTABLE BED OF A RECREATIONAL VEHICLE**
HUBBETT EINES FREIZEITFAHRZEUGS
LIT SOULEVABLE D'UN VÉHICULE DE LOISIRS

(30) Priority: 27.08.2021 IT 202100022415
(43) Date of publication of application: 01.03.2023
(73) Proprietor: LCI Italy S.r.l., 50026 San Casciano in Val di Pesa (FI) (IT)
(72) Inventor: MIRONE, Bruno, POGGIBONSI (SIENA) (IT)
(74) Representative: Firmati, Leonardo

(56) References cited:
- EP-A1- 3 093 191
- AT-B- 335 657
- GB-A- 1 460 567
- US-A- 4 592 105

## Description

This invention relates to a liftable bed of a recreational vehicle.

More specifically, the invention relates to the sector of vans, mini-vans, camper vans or the like, also known as "recreational vehicles", that is to say, suitable for leisure time and such as to comprise a habitable space. The habitable space is usually confined, so the need is felt to increase as much as possible the available space. This is especially true in height; that is to say, being able to have as much space as possible improves the comfort of the living space.

This prevents the occupants of the compartment from being forced to lower the head, or to pay attention, in order not to strike cupboards or furnishing items, for example, stored on the ceiling of the habitable space.

In this regard, the need is felt to provide beds designed to improve, not only the habitability, but the safety of the space available inside a recreational vehicle.

Solutions are currently known for the purpose (see e.g. EP 3 093 191 A1, US 4 592 105 A, AT 335 657 B, GB 1 460 567 A), which, however, have drawbacks, some of which are listed below. For example, the prior art solutions do not allow the overall dimensions and weights of a bed for recreational vehicles to be reduced.

In effect, prior art slat carrier devices use standard profile sections such as to define a predetermined size in height for the bed.

A further drawback of the prior art solutions relates to the protection screen of a bed, which is currently only used on some beds, without having the possibility of removing the protective screen, fitting it when necessary, or storing it in such a way as to reduce the space occupied by the bed as a whole.

A further drawback of the prior art solutions is due to the fact that the current weights and dimensions of beds for recreational vehicles do not allow additional accessory elements to be added to the bed, which could improve the comfort, such as, for example, a reading light or an isolation panel.

A further drawback of the prior art solutions relates to the overhanging and projecting elements of the bed which may represent critical points for the safety of the occupants.

A further drawback is due to the fact that the standard profiles do not allow the insertion of the slats to be easily adapted in beds with curvilinear shapes, or different from the classic quadrangular extensions.

The aim of the invention is therefore to provide a liftable bed of a recreational vehicle which is able to overcome the above-mentioned drawbacks of the prior art. A further aim of the invention is to provide a liftable bed of a recreational vehicle which is at the same time practical to use and simple and inexpensive to make. According to the invention, these aims and others are achieved by a liftable bed of a recreational vehicle comprising the technical features described in the accompanying claims.

The technical features of the invention, with reference to the above-mentioned aims, are clearly described in the appended claims and its advantages are apparent from the detailed description which follows, with reference to the accompanying drawings which illustrate a purely non-limiting example embodiment of the invention, in which:
- Figures 1, 2 and 3 are schematic axonometric views from different angles of an embodiment of the liftable bed of a recreational vehicle according to the invention;
- Figure 4 is a schematic axonometric view of a detail of the bed of the previous drawings;
- Figures 5 and 6 are, respectively, a schematic front elevation view and a schematic top view of the bed of Figures 1, 2 and 3;
- Figures 7 and 8 are schematic axonometric views of a detail of a bed of a recreational vehicle according to the prior art;
- Figures 9, 10, 11, 14 and 15 are schematic axonometric views of certain details of the bed of Figures 1, 2 and 3;
- Figures 12 and 13 are schematic axonometric views of two different cross sections of the detail of the bed of Figure 11.

With reference to the accompanying drawings, the numeral 1 denotes in its entirety a liftable bed of a recreational vehicle made in accordance with the invention, hereinafter also referred to simply as the bed 1.

With reference to the accompanying drawings, the bed 1 comprises: two uprights 2, a base 3, a slat carrier device 4 and a plurality of slats 5.

The two uprights 2 are integral with the recreational vehicle.

More specifically, the two uprights are installed inside the habitable space of the recreational vehicle.

The base 3 slidably engages with the two uprights 2.

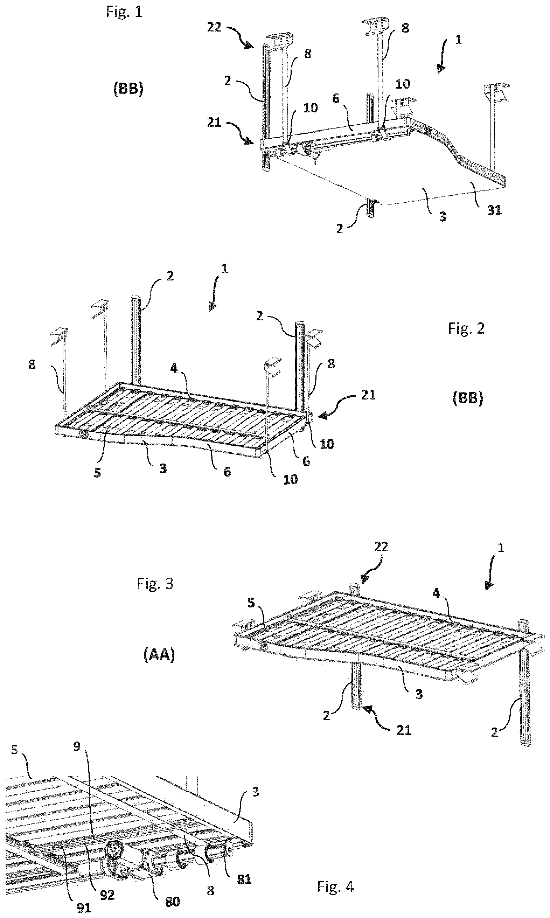

For this purpose, the two uprights 2 each have a track, not illustrated, to allow the translation of the base 3. The base 3 is movable between at least a first lowered position BB, illustrated in Figures 1 and 2, and at least one second raised position AA, illustrated in Figure 3. Advantageously, at least a first lowered position BB is close to a first end 21 of one of the two uprights 2. And at least a second raised position AA is close to a second end 22 of at least one of the two uprights 2, as shown in Figure 3.

The base 3 comprises a lower panel 31 of the bed 1 for isolating the bed from the surrounding environment or screening the plurality of slats 5.

The base 3 comprises a frame 6 closed in a loop.

In this way, the frame 6 defines the space necessary to receive a mattress, not illustrated, to be placed on the plurality of slats 5.

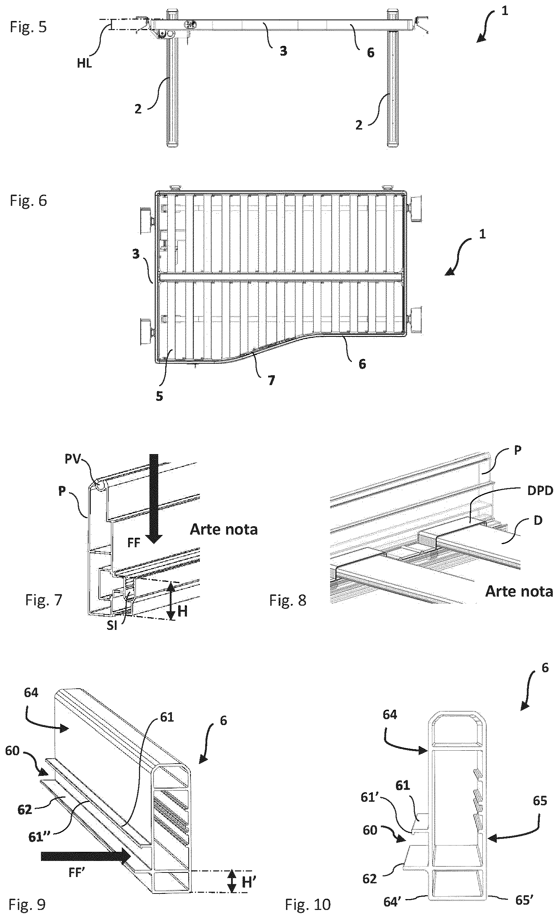

The frame 6 comprises a first side wall 64 and a second side wall 65, wherein the second side wall 65 is opposite the first side wall 64, as illustrated in Figure 10.

The first side wall 64 has a guide 60 defined by a first protrusion 61 and a second protrusion 62, as illustrated in Figures 9 and 10.

With reference to the accompanying drawings, the first protrusion 61 is located in a plane positioned above the second protrusion 62.

The first protrusion 61 and the second 62 are separated and spaced from each other in such a way as to define the guide 60.

The first protrusion 61 and the second 62 protrusion extend perpendicularly from the first side wall 64, as illustrated in Figures 9 and 10.

Advantageously, the second protrusion 62 is located along the lower half of the first side wall 64.

More specifically, with reference to the accompanying drawings, the second protrusion 62 is positioned in such a way as to leave a free space beneath it, in such a way as to allow the passage, for example, of cables or other elements necessary for correct operation or comfort of the bed 1.

According to embodiments not illustrated, the second protrusion 62 is positioned flush with the lower edge 64' of the first side wall 64.

This is to ensure that space is not left below the second protrusion 62, for example when it is necessary to optimise the spaces and dimensions of the bed 1, or when it is necessary to reduce to a minimum the height HL of the bed 1, defined in Figure 5.

The first protrusion 61 has a coupling element 61' configured to engage on a coupling element 43 of the slat carrier device 4, described in more detail below. In this way, the slat carrier device 4 is constrained to the frame 6.

The coupling element 61' is positioned on at least part of the outermost end edge 61'' of the first protrusion 61.

The slat carrier device 4 is configured to be constrained to the frame 6, for receiving the plurality of slats 5. In effect, the plurality of slats 5 is connected to the slat carrier device 4 in such a way that the slats 5 remain in position, to define the support surface of the mattress, not illustrated.

The slat carrier device 4 in turn comprises a support base 41 and at least one blocking element 42.

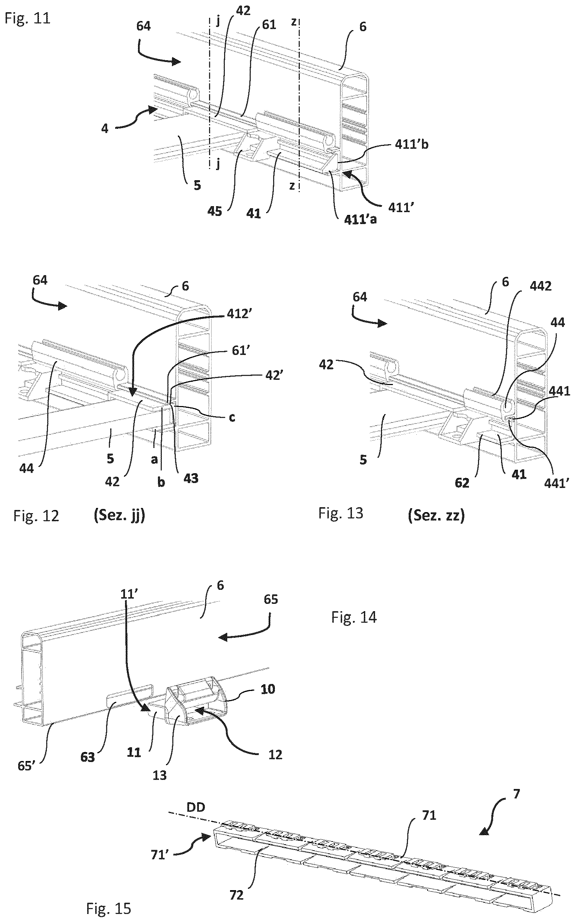

With reference to Figures 11, 12 and 13, the support base 41 comprises an surface 411' of external extension configured to be positioned resting in the guide 60 of the frame 6.

The surface 411' of external extension having a substantially triangular cross section.

The surface 411' of external extension is defined in Figure 11 by the surfaces 411'a and 411'b.

In that way, the support base 41 can come into contact with the second protrusion 62 of the frame 6. Advantageously, the support base 41, thanks to the surface 41'b, is also in contact with the first side wall 64, in such a way as to guarantee, in the manner of an end stop, the correct position of the slat carrier device 4 in the guide 60.

Advantageously, the support base 41 does not engage on the first protrusion 61.

Advantageously, the slat carrier device 4 comprises more than one blocking element 42.

The blocking element 42 is configured to constrain a slat 5 on all four relative end sides, in such a way as to hold it in position even during the movements of the recreational vehicle.

Each blocking element 42 is integral with the support base 41 and is configured to constrain one of the slats 5 in a predetermined position along the guide 60.

The blocking element 42 is also configured to constrain the slat carrier device 4 to the guide 60.

The blocking element 42 comprises an surface 412' of external extension having a substantially C-shaped cross section configured to be inserted at least partly into the guide 60 of the frame 6, as illustrated in Figure 12.

The surface 412' of external extension is defined by the surfaces with a, b, c, indicated in Figure 12. Advantageously, the slat carrier device 4 comprises a coupling element 43.

The coupling element 43 is located at the blocking element 42.

The tooth 42' positioned on the upper surface of the blocking element 42 forms the coupling element 43 for the blocking element 42, as illustrated in Figure 12. The tooth 42', which faces the first protrusion 61, is configured to engage with the coupling element 61' of the first protrusion 61, as illustrated in Figure 12. In this way, the slat carrier device 4 is constrained to the frame 6.

Advantageously, the slat carrier device 4 has a linear extension.

In other words, the support base 41 is linear, as shown in the accompanying drawings.

The blocking element 12 has a linear extension, as shown in the accompanying drawings.

Advantageously, the slat carrier device 4 is made of flexible material so that it can be easily inserted in the guide 60 of the frame 6.

Advantageously, the slat carrier device 4 is made in a single piece to give greater strength and stability to the slat carrier device 4.

According to some embodiments, the bed 1 comprises a protection screen, to improve the safety of the bed 1 when used by children, for example, to prevent them from falling when the bed is suspended in the air.

In these configurations the slat carrier device 4 comprises coupling means 44 configured to be constrained with their first end edge 441 along the first protrusion 61 of the frame 6, at a portion of it not engaged by a blocking element 42, as illustrated in Figures 11, 12 and 13.

Advantageously, the coupling means 44 comprise a coupling tooth 441' configured for constraining the coupling means 44 to the coupling element 61' of the first protrusion 61, as illustrated in Figure 13.

The coupling means 44 also comprise a seat 442 for fixing the protective screen, not illustrated, to the frame 6. Advantageously, the coupling means 44 are removable, in such a way that they can be inserted when required. According to other embodiments, the coupling means 44 are made as one with the support base 41. Advantageously, the slat carrier device 4 also comprises further coupling means 45 for attaching an accessory element to the bed 1, as illustrated in Figure 11. According to some embodiments, the bed 1 comprises a slat carrier insert 7, an example of which is shown in Figure 15.

The slat carrier insert 7 comprises a support base 71 having a surface 71' of external extension configured to be inserted into the guide 60 of the frame 6.

More specifically, the support base 71 has a substantially C-shaped cross section for constraining at least one of the slats 5 in a predetermined position along the guide 60 of the frame 6.

Advantageously, the slat carrier insert 7 does not have elements for blocking the slat transversal to the main direction of extension DD of the insert itself.

In that way, the slat 5 can be positioned in the most suitable position along the main direction of extension DD, depending on requirements.

The support base 71 of the slat carrier insert 7 has at least one notch 72 to allow the insert 7 to follow a curved profile of the frame 6.

In other words, it is possible to adapt the slat carrier insert 7 to beds of different shapes and sizes.

In effect, if the frame 6 has curvilinear extensions, the slats 5, in order to follow the curve, cannot be positioned equidistant from each other, but must follow one or more predetermined radiuses of curvature of the curve of the frame.

In order to facilitate this arrangement of the slats 5, the slat carrier insert 7 does not have blocks between one slat 5 and the adjacent slat.

Advantageously, the slat carrier insert 7 is made of a flexible material so that it can be easily inserted into the guide 60 of the frame 6.

The slat carrier insert 7 also comprises further coupling means 45, not illustrated, for attaching an accessory element to the bed 1.

The further coupling means 45 according to some embodiments are of the removable type, whilst according to other embodiments they are made in a single piece with the support base 71.

According to embodiments not illustrated, the slat carrier device 4 is replaced by the slat carrier insert 7.

With reference to the accompanying drawings, the bed 1 comprises anti-tip means 8 configured to support the base 3, as illustrated in Figures 1 to 4.

Straps, ropes, belts or similar products represent the anti-tip means 8 for the bed 1.

The anti-tip means 8 allow the bed 1 to be held down and prevent the bed from oscillating or rotating, which could adversely affect the safety and stability of the bed in different configurations of use.

Configurations of use are, for example, the first position BB lowered towards a ground surface, to be able to access the bed, and the second position AA raised towards the ceiling of the habitable space, to facilitate the comfort of the recreational vehicle.

With reference to the accompanying drawings, there are two belts 8, spaced apart from each other, for supporting the bed 1.

According to other embodiments not illustrated, the number of belts 8 is greater or smaller than two, based on the dimensions and weights of the bed 1.

The bed 1 also comprises at least one device 10 for sliding anti-tip means 8 positioned on the second side wall 65 of the frame 6, as illustrated in Figure 14.

In these configurations, the frame 6 has a slot 63, as described in more detail below.

More specifically, the sliding device 10 comprises: an interlocking portion 11 and a stop portion 13.

The interlocking portion 11 has an surface 11' of external extension, designed to define an opening 12. The portion 11 is configured to be inserted into the slot 63 of the frame 6.

In this way, the device 10 is at least partly connected to the frame 6.

The stop portion 13, which is integral with the interlocking portion 11, is configured in such a way that the device 10 has a substantially T-shaped profile. In effect, the stop portion 13 is configured to be positioned in contact with the second side wall 65 of the frame 6.

The stop portion 13 is configured to be stably connected to the second side wall 65, for example with coupling means not illustrated.

The anti-tip means 8 pass through the opening 12 to protrude from the side of the frame 6 defined by the second side wall 65.

Advantageously, the device 10 is positioned flush with a lower edge 65' of the second wall 65 to prevent overhanging or surfaces projecting from the lower surface of the base 3 or of the frame 6.

The anti-tip means 8 slide inside the sliding device 10, thanks to the opening 12, on opposite sides of the base 3.

The bed 1 also comprises at least one guide 9 for supporting the anti-tip means 8, as illustrated in Figure 4.

The support guide 9 is positioned transversally to the bed 1 to intercept the anti-tip means 8.

The support guide 9 is stably connected to the base 3. This increases the rigidity and the strength of the bed 1.

The support guide 9 is also configured in such a way that the anti-tip means 8 emerge only at the ends of the base 3, at the frame 6 and the devices 10.

As illustrated in Figure 4, the support guide 9 comprises a slot 91 in which the anti-tip means 8 slide, to facilitate the sliding and correct tensioning and position of the anti-tip means 8.

Again with reference to Figure 4, the support guide 9 comprises at least one engagement seat 92 for connecting an accessory element to the bed 1.

An accessory element is, for example, represented by an isolation panel, cupboards or objects such as to increase the comfort of the bed 1.

The bed 1 comprises movement means 80 positioned close to one end of the base 3 for translating the base 3 along the two uprights 2 between at least a first position BB and at least a second position AA.

The movement means 80 comprise a motor designed to move a shaft 81.

The anti-tip means 8 are constrained with a relative first end to the shaft 81 and with the other end to the recreational vehicle, so that the anti-tip means 8 rotate on themselves during the translation of the base 3 along the two uprights 2.

In use, when the movement means 8 are actuated, the bed 1, starting from a closed configuration, corresponding to the second raised position AA, shown in Figure 3, moves to an open configuration shown, for example, by the first lowered position BB, illustrated in Figures 1 and 2.

The base 3 thus translates on the two uprights 2, whilst the anti-tip means 8 unwind about the shaft 81 to support the bed 1 whilst descending from the ceiling towards the habitable space of the recreational vehicle.

The liftable bed of a recreational vehicle achieves the preset aims and brings important advantages.

A first advantage of the bed according to the invention is the possibility of reducing the dimensions of the bed and thereby increasing the useful space of the recreational vehicle.

As may be seen in Figures 7 and 8, the known profile P and the respective prior art slat carrier device DPD comprise a coupling which extends in an insertion plane of the slat carrier device DPD from the top downwards, as shown by the arrow FF in Figure 7.

In this way, the slats D are inserted in contrast between the slat carrier device DPD and the profile P, making installation difficult, as it is not possible to define in advance the position of the slats D.

Moreover, the shape of the prior art profile P, comprising a seat SI for engaging the slat carrier device DPD facing upwards, determines the height H at which the slats D can be positioned.

In the bed according to the invention, on the other hand, the guide 60 of the frame 6 allows the slat carrier device 4 to be inserted laterally, as indicated by the arrow FF' in Figure 9.

In this way, the height H' at which to position the slats 5 is considerably reduced with respect to the height H of the prior art devices, allowing the overall dimensions of the bed 1 to be reduced, especially in terms of height HL of the bed.

Another advantage is due to the possibility of reducing the weights of a liftable bed of a recreational vehicle. Another advantage is the possibility of inserting the sliding device 10 flush with the bed, facilitating the installation, and allowing the projecting elements and the overhanging elements necessary for installing the lower panel 31 of the bed to be reduced.

In this way, the safety of the habitable space of the recreational vehicle is also increased.

A further advantage is the possibility of facilitating the installation of the slats and also of being able to adapt them to different shapes of beds, for example if this has curvilinear stretches.

Yet another advantage is the possibility of only having the coupling means 44 for the protection screen as required.

In effect, as illustrated in Figure 7, the prior art solutions comprise means PV for coupling the protection screen positioned on the top of the profile P, thereby further increasing the overall dimensions of the profile P.

The bed according to the invention comprises, on the other hand, the use of coupling means 44, to be inserted when required, and positioned at the first protrusion 61, thereby allowing a further reduction in the overall dimensions of the frame 6, and consequently of the bed 1.

Yet another advantage is due to the fact that it is possible to fix accessory elements to the bed in different positions of the bed.

## Claims

1. A liftable bed (1) of a recreational vehicle, comprising:
- two uprights (2) integral with said recreational vehicle;
- a base (3) slidingly engaged with said two uprights (2) and movable between at least a first position (BB) lowered and at least a second position (AA) raised, said base (3) comprising a frame (6) closed in a ring;
- a slat carrier device (4) configured to be constrained to said frame (6) of said base (3);
- a plurality of slats (5) configured to be constrained to said slat carrier device (4), said bed being **characterized in that** said frame (6) comprises a first side wall (64) having a guide (60) defined by a first (61) and a second (62) protrusion, separated from each other, which extend perpendicularly from said first side wall (64), **and in that** said slat carrier device (4) comprises:
- a support base (41) comprising a surface (411') of external extension configured to arrange in support within said guide (60) of said frame (6), said surface (411') of external extension having a substantially triangular cross-section;
- at least one blocking element (42), integral with said support base (41), and configured to engage one of said slats (5) at a determined position along said guide (60) of said frame (6), and to engage said device (4) to said guide (60), said blocking element (42) comprising a surface (412') of external extension having a substantially C-shaped section configured to fit at least partially within said guide (60) of said frame (6).

2. The bed according to the preceding claim, **characterized in that** said second (62) protrusion is arranged along the lower half of said first side wall (64).

3. The bed according to any one of the preceding claims, wherein said slat carrier device (4) comprises a coupling element (43) **characterized in that** said first protrusion (61) has a coupling element (61') configured to be engaged to said coupling element (43) of said slat carrier device (4) to engage said slat carrier device (4) to said frame (6).

4. The bed according to claim 1, **characterized in that** said slat carrier device (4) has linear extension.

5. The bed according to any one of the preceding claims, **characterised in that** it comprises a slat carrier insert (7) comprising:
- a support base (71) comprising a surface (71') of external extension configured to fit within said guide (60) of said frame (6), said support base (71) having a substantially C-shaped section to engage at least one of said slats (5) at a predetermined position along said guide (60) of said frame (6).

6. The bed according to the preceding claim, **characterized in that** said support base (71) supporting said slat carrier insert (7) has at least one notch (72) to allow said insert (7) to follow a curved profile of said frame (6).

7. The bed according to any one of the preceding claims, **characterized in that** it further comprises:
- anti-tip means (8) configured to support said base (3), and
- at least one sliding device (10) of said anti-tip means (8) disposed on a second side wall (65) of said frame (6), wherein said second side wall (65) is opposite said first side wall (64).

8. The bed according to the preceding claim, wherein said frame (6) has a slot (63) **characterized in that** said at least one sliding device (10) comprises:
- an interlocking portion (11) having a surface (11') of external extension, designed to define an opening (12), said portion (11) being configured to fit inside said slot (63) of said frame (6);
- a stop portion (13) integral with said interlocking portion (11), so that said device (10) has a substantially T-shaped profile, said stop portion (13) being configured to be in contact with said second side wall (65) of said frame (6), wherein said stop portion (13) is configured to be stably engaged to said second side wall (65), so that said anti-tip means (8) pass through said opening (12) to exit from the side of said frame (6) defined by said second side wall (65).

9. The bed according to claim 1, **characterized in that** it comprises handling means (80) arranged in proximity to one end of said base (3) for translating said base (3) along said two uprights (2) between said at least one first (BB) and at least one second (AA) position.

## Patentansprüche

1. Hubbett (1) eines Freizeitfahrzeugs, umfassend:
- zwei Pfosten (2), die einteilig mit dem Freizeitfahrzeug verbunden sind;
- eine Basis (3), die gleitbar mit den zwei Pfosten (2) in Eingriff steht und bewegbar ist zwischen zumindest einer abgesenkten ersten Stellung (BB) und zumindest einer angehobenen zweiten Stellung (AA), wobei die Basis (3) einen Rahmen (6) umfasst, der zu einem Ring geschlossen ist;
- eine Lattenhaltevorrichtung (4), die dafür ausgelegt ist, an dem Rahmen (6) der Basis (3) festgelegt zu werden;
- eine Vielzahl von Latten (5), die dafür ausgelegt sind, an der Lattenhaltevorrichtung (4) festgelegt zu werden, wobei das Bett **dadurch gekennzeichnet ist, dass** der Rahmen (6) eine erste Seitenwand (64) umfasst, die eine Führung (60) aufweist, die durch einen ersten (61) und einen zweiten (62) Vorsprung definiert ist, die voneinander getrennt sind und die sich orthogonal von der ersten Seitenwand (64) ausgehend erstrecken, **und dadurch, dass** die Lattenhaltevorrichtung (4) umfasst:
- eine Trägerbasis (41), umfassend eine äußere Erstreckungsfläche (411'), die dafür ausgelegt ist, aufliegend in der Führung (60) des Rahmens (6) angeordnet zu werden, wobei die äußere Erstreckungsfläche (411') einen im Wesentlichen dreieckigen Querschnitt aufweist;
- zumindest ein Blockierelement (42), das einteilig mit der Trägerbasis (41) verbunden und dafür ausgelegt ist, eine der Latten (5) in einer vorbestimmten Stellung entlang der Führung (60) des Rahmens (6) festzulegen, und die Vorrichtung (4) an der Führung (60) festzulegen, wobei das Blockierelement (42) eine äußere Erstreckungsfläche (412') umfasst, die einen im Wesentlichen C-förmigen Querschnitt aufweist, der dafür ausgelegt ist, zumindest teilweise in die Führung (60) des Rahmens (6) eingepasst zu werden.

2. Bett nach dem vorhergehenden Anspruch, **dadurch gekennzeichnet, dass** der zweite (62) Vorsprung entlang der unteren Hälfte der ersten Seitenwand (64) angeordnet ist.

3. Bett nach einem der vorhergehenden Ansprüche, wobei die Lattenhaltevorrichtung (4) ein Kopplungselement (43) umfasst, das **dadurch gekennzeichnet ist, dass** der erste Vorsprung (61) ein Kopplungselement (61') aufweist, das dafür ausgelegt ist, mit dem Kopplungselement (43) der Lattenhaltevorrichtung (4) in Eingriff gebracht zu werden, um die Lattenhaltevorrichtung (4) an dem Rahmen (6) festzulegen.

4. Bett nach Anspruch 1, **dadurch gekennzeichnet, dass** die Lattenhaltevorrichtung (4) eine lineare Erstreckung aufweist.

5. Bett nach einem der vorhergehenden Ansprüche, **dadurch gekennzeichnet, dass** es einen Lattenhalteeinsatz (7) umfasst, umfassend:
- eine Trägerbasis (71), umfassend eine äußere Erstreckungsfläche (71'), die dafür ausgelegt ist in die Führung (60) des Rahmens (6) eingepasst zu werden, wobei die Trägerbasis (71) einen im Wesentlichen C-förmigen Querschnitt aufweist, um zumindest eine der Latten (5) an einer vorbestimmten Stellung entlang der Führung (60) des Rahmens (6) festzulegen.

6. Bett nach dem vorhergehenden Anspruch, **dadurch gekennzeichnet, dass** die Trägerbasis (71), die den Lattenhalteeinsatz (7) trägt, zumindest eine Einkerbung (72) aufweist, um es dem Einsatz (7) zu ermöglichen, einem kurvenförmigen Profil des Rahmens (6) zu folgen.

7. Bett nach einem der vorhergehenden Ansprüche, **dadurch gekennzeichnet, dass** es ferner umfasst:
- Kippsicherungsmittel (8), die dafür ausgelegt sind, die Basis (3) zu stützen, und
- zumindest eine Gleitvorrichtung (10) für die Kippsicherungsmittel (8), die auf einer zweiten Seitenwand (65) des Rahmens (6) angeordnet ist, wobei die zweite Seitenwand (65) der ersten Seitenwand (64) gegenüberliegt.

8. Bett nach dem vorhergehenden Anspruch, wobei der Rahmen (6) einen Schlitz (63) aufweist, **dadurch gekennzeichnet, dass** die zumindest eine Gleitvorrichtung (10) umfasst:
- einen Einrastabschnitt (11), der eine äußere Erstreckungsfläche (11') aufweist, dafür ausgelegt, eine Öffnung (12) zu definieren, wobei der Abschnitt (11) dafür ausgelegt ist, in den Schlitz (63) des Rahmens (6) eingeführt zu werden;
- einen Anschlagabschnitt (13), der einteilig mit dem Einrastabschnitt (11) ausgeführt ist, so dass die Vorrichtung (10) ein im Wesentlichen T-förmiges Profil aufweist, wobei der Anschlagabschnitt (13) dafür ausgelegt ist, in Kontakt mit der zweiten Seitenwand (65) des Rahmens (6) zu stehen, wobei der Anschlagabschnitt (13) dafür ausgelegt ist, an der zweiten Seitenwand (65) festgelegt zu werden, so dass die Kippsicherungsmittel (8) durch die Öffnung (12) treten, um aus der Seite des Rahmens (6) auszutreten, die durch die zweite Seitenwand (65) definiert ist.

9. Bett nach Anspruch 1, **dadurch gekennzeichnet, dass** es Handhabungsmittel (80) umfasst, die in der Nähe eines Endes der Basis (3) angeordnet sind, um die Basis (3) entlang der zwei Pfosten (2) zwischen der zumindest einen ersten (BB) und zumindest einen zweiten (AA) Stellung zu bewegen.

## Revendications

1. Un lit soulevable (1) d'un véhicule de loisirs, comprenant :
- deux montants (2) solidaires dudit véhicule de loisirs ;
- une base (3) assujettie de façon coulissante auxdits deux montants (2) et mobile entre au moins une première position (BB) basse et au moins une deuxième position (AA) haute, ladite base (3) comprenant un cadre (6) fermé en anneau ;
- un dispositif porte-lattes (4) configuré pour être contraint audit cadre (6) de ladite base (3) ;
- une pluralité de lattes (5) configurées pour être contraintes audit dispositif porte-lattes (4), ledit lit étant **caractérisé en ce que** ledit cadre (6) comprend une première paroi latérale (64) ayant un guide (60) défini par une première (61) et une deuxième (62) saillie, séparées l'une de l'autre, qui s'étendent perpendiculairement à partir de ladite première paroi latérale (64), et **en ce que** ledit dispositif porte-lattes (4) comprend :
- une base de support (41) comprenant une surface (411') d'extension extérieure configurée pour se placer en appui dans ledit guide (60) dudit cadre (6), ladite surface (411') d'extension extérieure ayant une section essentiellement triangulaire ;
- au moins un élément de blocage (42), solidaire de ladite base de support (41), et configuré pour assujettir une desdites lattes (5) au niveau d'une position donnée le long dudit guide (60) dudit cadre (6), et pour assujettir ledit dispositif (4) audit guide (60), ledit élément de blocage (42) comprenant une surface (412') d'extension extérieure ayant une section essentiellement en forme de C configurée pour s'emboîter au moins partiellement dans ledit guide (60) dudit cadre (6).

2. Le lit selon la revendication précédente, **caractérisé en ce que** ladite deuxième saillie (62) est disposée le long de la moitié inférieure de ladite première paroi latérale (64).

3. Le lit selon l'une quelconque des revendications précédentes, dans lequel ledit dispositif porte-lattes (4) comprend un élément d'accouplement (43), **caractérisé en ce que** ladite première saillie (61) a un élément d'accouplement (61') configuré pour être assujetti audit élément d'accouplement (43) dudit dispositif porte-lattes (4) pour assujettir ledit dispositif porte-lattes (4) audit cadre (6).

4. Le lit selon la revendication 1, **caractérisé en ce que** ledit dispositif porte-lattes (4) a une extension linéaire.

5. Le lit selon l'une quelconque des revendications précédentes, **caractérisé en ce qu'**il comprend un insert porte-lattes (7) comprenant :
- une base de support (71) comprenant une surface (71') d'extension extérieure configurée pour s'emboîter dans ledit guide (60) dudit cadre (6), ladite base de support (71) ayant une section essentiellement en forme de C pour assujettir au moins une desdites lattes (5) au niveau d'une position donnée le long dudit guide (60) dudit cadre (6).

6. Le lit selon la revendication précédente, **caractérisé en ce que** ladite base de support (71) supportant ledit insert porte-lattes (7) a au moins une entaille (72) pour permettre audit insert (7) de suivre un profil courbe dudit cadre (6).

7. Le lit selon l'une quelconque des revendications précédentes, **caractérisé en ce qu'**il comprend en outre :
- des moyens anti-basculement (8) configurés pour supporter ladite base (3), et
- au moins un dispositif (10) de coulissement desdits moyens anti-basculement (8) disposé sur une deuxième paroi latérale (65) dudit cadre (6), où ladite deuxième paroi latérale (65) est opposée à ladite première paroi latérale (64).

8. Le lit selon la revendication précédente, dans lequel ledit cadre (6) a une fente (63), **caractérisé en ce que** ledit au moins un dispositif de coulissement (10) comprend :
- une portion d'emboîtement (11) ayant une surface (11') d'extension extérieure, destinée à définir une ouverture (12), ladite portion (11) étant configurée pour s'emboîter dans ladite fente (63) dudit cadre (6) ;
- une portion de butée (13) solidaire de ladite portion d'emboîtement (11), de manière à ce que ledit dispositif (10) ait un profil essentiellement en forme de T, ladite portion de butée (13) étant configurée pour être en contact avec ladite deuxième paroi latérale (65) dudit cadre (6), dans lequel ladite portion de butée (13) est configurée pour être assujettie de façon stable à ladite deuxième paroi latérale (65), de manière à ce que lesdits moyens anti-basculement (8) passent à travers ladite ouverture (12) pour sortir du côté dudit cadre (6) défini par ladite deuxième paroi latérale (65).

9. Le lit selon la revendication 1, **caractérisé en ce qu'**il comprend des moyens de manipulation (80) disposés à proximité d'une extrémité de ladite base (3) pour translater ladite base (3) le long desdits deux montants (2) entre lesdites au moins une première (BB) et au moins une deuxième (AA) positions.
